# EUROPÄISCHE PATENTSCHRIFT

(11) **EP 0 548 608 B1**
(45) Veröffentlichungstag und Bekanntmachung des Hinweises auf die Patenterteilung: **13.03.1996**
(21) Anmeldenummer: 92120551.4
(22) Anmeldetag: 02.12.1992
(51) Int. Cl.: H02K 1/27, H02K 15/03

(54) **Rotor für permanentmagneterregte elektrische Maschinen hoher Drehzahl sowie mit diesem Rotor konfektionierte elektrische Maschine**
Rotor for permanent magnet-activated electric machine for high rotation speed, and electric machine fitted with the said rotor
Rotor pour machine électrique à excitation par aimants permanents à haute vitesse de rotation et machine électrique équipée d'un tel rotor

(30) Priorität: 20.12.1991 DE 4142461
(43) Veröffentlichungstag der Anmeldung: 30.06.1993
(73) Patentinhaber: PILLER-GmbH, D-37520 Osterode am Harz (DE)
(72) Erfinder: Canders, Wolf-Rüdiger, W-3360 Osterode am Harz (DE); Heldt, Joachim, W-3360 Osterode am Harz 14 (DE); Zellmann, Norbert, W-3360 Osterode am Harz (DE)
(74) Vertreter: Hoeger, Stellrecht & Partner

(56) Entgegenhaltungen:
- EP-A- 0 212 552
- DE-A- 3 224 904

## Beschreibung

Die Erfindung betrifft einen Rotor für permanentmagneterregte elektrische Maschinen hoher Drehzahl sowie eine mit diesem Rotor konfektionierte elektrische Maschine.

Unter "hoher Drehzahl" werden Umdrehungen von über 18.000 U/min. verstanden, insbesondere Umdrehungen zwischen 18.000 und 120.000 U/min..

Wie sich aus der DE 39 43 237 A1 ergibt, ist ein Rotor für die genannten Anwendungszwecke mit folgenden Merkmalen bekannt:
- Auf einem Teilabschnitt der Rotorwelle sind umfangsseitig Permanentmagnete mit dazwischen angeordneten Füllstücken aus einem unmagnetischen Material angeordnet,
- die Permanentmagnete und die Füllstücke verlaufen in axialer Richtung der Rotorwelle und sind
- umfangsseitig von einer unter Vorspannung stehenden Bandage aus einem hochfesten Werkstoff ummantelt.

Die Konfektionierung des Rotors ist derart, daß die Bandage im Luftspalt der elektrischen Maschine liegt.

Insbesondere bei hochtourigen, permanentmagneterregten, elektrischen Maschinen, deren Dauermagnete auf dem Läuferballen durch eine Bandage gehalten werden, sind Unwuchten durch unsymmetrische radiale Verlagerungen der Dauermagnete bei höheren Umfangsgeschwindigkeiten nicht immer mit Sicherheit zu vermeiden, weil sich der Verbund aus Kunststoffbandage und Dauermagneten unter Einwirkung der Fliehkräfte stärker dehnt als der Läuferballen. Dadurch entsteht ein Spalt zwischen den Dauermagneten und dem Läuferballen, der zu veränderlichen Unwuchten führen kann.

Zur Vermeidung dieser Nachteile schlägt die DE 39 43 237 A1 vor, die äußere, der Bandage zugewandte Oberfläche des Läuferballens (der Rotorwelle) durch mehrere Aussparungen zu unterteilen, so daß bei einer Aufweitung durch Fliehkraftbeanspruchungen dort Tangentialspannungen möglichst vermieden werden.

Einen anderen Weg zur Lösung des genannten Problems offenbart die DE 32 24 904 C2. Da hochremanente Permanentmagnete wegen ihrer inneren Gefügestruktur nicht als tragendes Material verwendet werden können, sondern empfindlich gegen Stoßbelastungen und Zugspannungen sind, werden die zur Erregung der bekannten elektrischen Maschine dienende Dauermagnete und die Füllstücke aus unmagnetischem Material für die Pollücken auf dem Läuferballen (der Läuferwelle) des Rotors durch eine Bandage aus faserverstärktem, insbesondere kohlenstoffverstärktem Kunststoff (CFK) unter Vorspannung zusammengehalten, wobei die Vorspannung des Mantels beziehungsweise der Bandage durch eine Verkeilung beziehungsweise konische Füllstücke vorgespannt wird.

Auch die Technik nach der DE 32 24 904 C2 ist relativ aufwendig (hohe Zahl genau zu fertigender Passungen, Inhomogenitäten der Spannungsverteilung über den Umfang), weshalb der vorliegenden Erfindung die Aufgabe zugrundeliegt, einen Rotor für permanentmagneterregte elektrische Maschinen hoher Drehzahl zur Verfügung zu stellen, der einfach aufgebaut ist und auch bei hohen Drehzahlen der elektrischen Maschine sicher konfektioniert bleibt.

Dabei liegt der Erfindung die Erkenntnis zugrunde, daß dieses Ziel überraschend einfach dadurch realisiert werden kann, indem die Oberfläche der Rotorwelle im Bereich der Permanentmagnete und Füllstücke umfangsseitig leicht konisch ausgebildet und eine Bandage als vorgefertigtes Bauteil mit korrespondierendem Innenkonus durch unmittelbare axiale Verschiebung auf die mit den Permanentmagneten und Füllstücken konfektionierte Rotorwelle aufgeschoben wird, wobei gleichzeitig eine Vorspannung der Bandage gegenüber der Rotorwelle erreichbar ist, die ausreicht, Unwuchten durch unsymmetrische radiale Verlagerungen der Dauermagnete und Füllstücke bei höheren Umfangsgeschwindigkeiten zu vermeiden. Es wurde festgestellt, daß die geringen Unterschiede in der Induktionsverteilung als Folge der Kegelkontur, keinen nennenswerten Einfluß auf den Betrieb und die Sicherheit der elektrischen Maschine haben.

Ein besonderer Vorteil der erfindungsgemäßen Ausbildung besteht darin, daß eine aufwendige Verkeilung ebenso vermieden wird wie eine (unerwünschte) Erhöhung der Bandagendicke, der durch die elektrisch vorgeschriebenen Maximalabmessungen des Luftspalts zwischen dem Ständer und dem Rotor der elektrischen Maschine, in dem sich die Bandage befindet, Grenzen gesetzt sind.

Demnach betrifft die Erfindung in ihrer allgemeinsten Ausführungsform einen Rotor für permanentmagneterregte elektrische Maschinen hoher Drehzahl mit folgenden Merkmalen:
- auf einem Teilabschnitt der Rotorwelle sind umfangsseitig Permanentmagnete mit dazwischen angeordneten Füllstücken aus unmagnetischem Material angeordnet,
- die Permanentmagnete und die Füllstücke verlaufen in axialer Richtung der Rotorwelle und sind
- umfangsseitig von einer unter Vorspannung stehenden Bandage aus einem hochfesten Werkstoff ummantelt, wobei
- die gemeinsame Umfangsfläche von Permanentmagneten und Füllstücken - in axialer Richtung der Rotorwelle betrachtet - leicht konisch ausgebildet ist, und
- die Bandage als vorgefertigtes Bauteil mit korrespondierendem Innenkonus durch unmittelbare axiale Verschiebung auf die mit den Permanentmagneten und Füllstücken konfektionierte Rotorwelle aufgeschoben worden ist, unter gleichzeitiger Aufbringung einer Vorspannung der Bandage gegenüber der Rotorwelle beziehungsweise deren Permanentmagneten und Füllstücken.

Die Konfektionierung der Rotorwelle wird nachstehend anhand eines Ausführungsbeispieles näher erläutert, dessen Merkmale insoweit allgemein gültig sind.

Nach einer vorteilhaften Ausführungsform ist vorgesehen, daß die Rotorwelle im Bereich der Permanentmagnete und Füllstücke mit einer polygonalen Querschnittsfläche ausgebildet ist, wobei die Permanentmagnete und Füllstücke jeweils auf den zugehörigen Polygonflächen befestigt, beispielsweise aufgeklebt, werden.

Dabei ist es weiter vorteilhaft, mehrere Permanentmagnete (gruppenweise) auf zwei gegenüberliegenden Abschnitten der Rotorwelle nebeneinander zu konfektionieren und die Füllstücke dazwischen anzuordnen, wobei die Gruppen von Permanentmagneten eine unterschiedliche Polung aufweisen.

Eine konkrete Ausführungsform kann danach so aussehen, daß die Rotorwelle im Querschnitt als Zwölfeck ausgebildet ist und die Permanentmagnete jeweils zu vier Stück nebeneinander und gegenüberliegend konfektioniert werden, so daß zwischen den gruppenweise als Nord- und Südpol angeordneten Permanentmagnet-Gruppen jeweils zwei unmagnetische Füllstücke auf den verbleibenden Polygonflächen angeordnet sind.

Die genannten Ausführungsformen ermöglichen es, zunächst die Rotorwelle mit den einzelnen Permanentmagneten und Füllstücken zu bestücken, wobei die gemeinsame Umfangsfläche anschließend unter Ausbildung einer - in Richtung der Wellenachse betrachtet - leicht konischen Form abgedreht wird. Die Oberfläche kann danach zusätzlich geschliffen werden. Der eingestellte Konuswinkel sollte vorzugsweise deutlich unter dem Winkel liegen, bei dem eine Selbsthemmung auftritt.

Auch hier ergeben sich Einzelheiten aus der nachfolgenden Figurenbeschreibung, die ebenfalls wieder allgemein gültig sind.

Die Füllstücke können aus Stahl oder Weicheisenelementen bestehen. Für die Bandage wird vorzugsweise ein faserverstärkter Kunststoff gewählt, wobei sich Kunststoffe bewährt haben, die mit Kohlenstoffasern verstärkt sind, sogenannte CFK-Werkstoffe.

Da der Elastizitätsmodul der Bandage bei Verwendung der genannten Verbundwerkstoffe deutlich niedriger ist als der Elastizitätsmodul des Wellenwerkstoffs und der Magnete/Füllstücke, ist nicht auszuschließen, daß die auf den Rotor wirkende Vorspannkraft bei hoher Fliehkraftbelastung zumindest teilweise aufgehoben wird. Um dies zu verhindern, schlägt eine weitere Ausgestaltung der Erfindung vor, Verbindungsbereiche von Rotorwelle, Permanentmagneten und Füllstücken mit einer elastischen Verklebung auszubilden, wobei elastische Füllelemente in die entsprechenden Klebefugen zusätzlich eingelegt werden können. Die elastische Verklebung kann zum Beispiel aus Silikon, die Füllelemente können als Streifen gestaltet sein und aus Kunststoff bestehen, zum Beispiel aus Aramid. Die Fugendicke sollte mindestens 0,2 mm betragen.

Eine alternative Möglichkeit der Abhilfe der genannten Probleme besteht darin, die Oberfläche der Rotorwelle mit einer gewissen Rauhigkeit auszubilden. Auch hierdurch wird die Elastizität des Rotors insgesamt erhöht. Ein Rauhigkeitswert Ra über 12,5 µm (vorzugsweise 12,5 bis 25 µm) hat sich als besonders vorteilhaft herausgestellt.

Weitere Vorteile der Erfindung ergeben sich aus den Merkmalen der Unteransprüche sowie den sonstigen Anmeldungsunterlagen, insbesondere der nachfolgenden Beschreibung eines Ausführungsbeispiels.

Dabei zeigen:
- Figur 1:: einen Wellenabschnitt eines Rotors einer Synchronmaschine mit entsprechenden Erregermagneten auf der Wellenoberfläche, wobei in der Figur oben ein Axialschnitt und unten eine Ansicht gezeigt wird,
- Figur 2:: einen Schnitt längs der Linie A-B nach Figur 1.

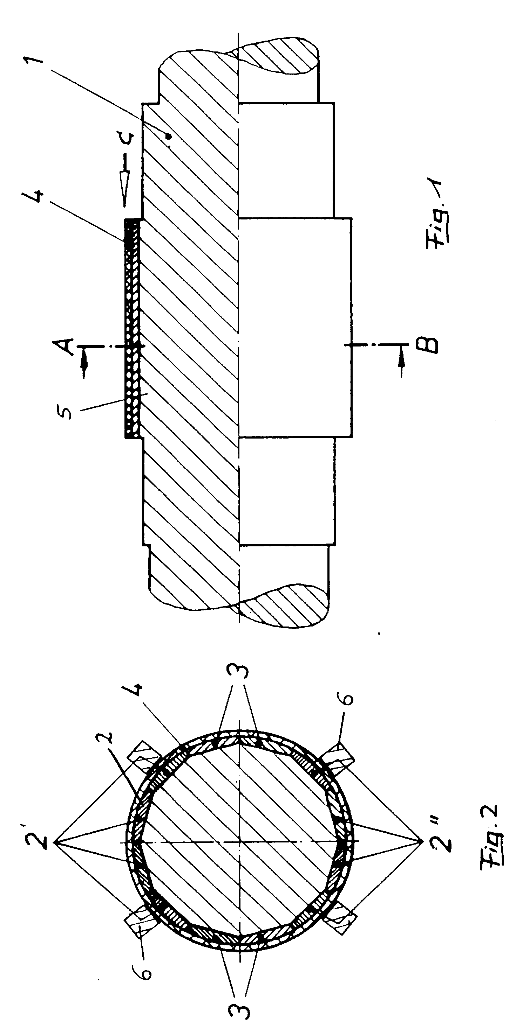

In Figur 1 ist ein Teil einer Rotorwelle 1 einer elektrischen Synchronmaschine dargestellt. Zu erkennen ist, daß ein Wellenabschnitt 5 einen größeren Durchmesser aufweist als die benachbarten Wellenabschnitte. Dieser Abschnitt 5 ist - wie Figur 2 zeigt - polygonal ausgebildet, und zwar hier in Form eines Zwölfecks. Auf den damit gebildeten zwölf Flächen sind jeweils in Vierergruppen gegenüberliegend Permanentmagnete 2 angeordnet, und zwar so, daß die Permanentmagnet-Gruppen 2', 2'' die beiden Magnetpole (Nord-Süd) bilden. Zwischen den gegenpoligen Magnetelement-Gruppen 2', 2'' sind jeweils zwei Weicheisenelemente 3 angeordnet, die die Magnetgruppen 2', 2'' voneinander trennen.

Sowohl die Permanentmagnetelemente 2 als auch die Weicheisenelemente 3 verlaufen in Axialrichtung der Rotorwelle 1 und sind auf die entsprechenden Polygonflächen aufgeklebt. Bei der Herstellung und Konfektionierung der Rotorwelle werden die Permanentmagnete 2 und Weicheisenelemente (Füllstücke) 3 nach dem Aufkleben gemeinsam abgedreht und geschliffen, und zwar derart, daß - in Axialrichtung der Rotorwelle - eine leichte Konizität entsteht, so daß die gemeinsame Oberfläche der Permanentmagnete 2 und Füllstücke 3 eine leichte Kegelform aufweist. Dabei liegt die Konizität wesentlich unter dem Winkel, bei dem eine Selbsthemmung auftritt. Auf die so vorbereiteten Permanentmagnete 2 und Füllstücke 3 wird anschließend eine, Kohlefasern enthaltende Kunststoff-Bandage 4 unmittelbar aufgeschoben. Die Bandage 4 wurde zuvor wie folgt hergestellt:

Die Bandage 4 wird gesondert auf einem Dorn mit einer korrespondierenden leicht konischen Oberfläche gewickelt. Die Wicklung erfolgt dabei derart, daß die Bandage umfangsseitig im wesentlichen zylindrisch ist. Daraus folgt, daß sie in dem Abschnitt mit geringerem Innendurchmesser eine größere Stärke aufweist als am anderen Ende.

Nach dem Aushärten des Kunstharzes, mit dem die Kohlefasern beim Wickeln benetzt werden, sind gemäß dem vorliegenden Ausführungsbeispiel außenseitig auf die Bandage Verstärkungsleisten 6 aufgeklebt worden, und zwar, wie Figur 2 zeigt, insgesamt vier Stück, die gleichmäßig in Axialrichtung der Welle 1 - über den Umfang der Bandage 4 verteilt angeordnet sind. Diese Verstärkungsleisten 6 können aus Kunststoff, ebenso aber auch aus Metall bestehen. Mit Hilfe der Verstärkungsleisten wird nach dem Aushärten der Bandage diese vom Wickeldorn abgedrückt, ohne die Wicklung selbst nennenswert zu belasten. Die Wicklung kann daher in ihrer Dicke entsprechend den von ihr aufzunehmenden Zugkräften bemessen werden und damit der Forderung einer Minimierung des Luftspaltes genügen.

Mit Hilfe der Verstärkungsleisten 6 wird die Wicklung anschließend auf die konisch geschliffene Oberfläche der Permanentmagnete 2 und Füllstücke 3 auf die Rotorwelle aufgeschoben. Dieser Vorgang ist in Figur 1 durch den Pfeil C dargestellt. Gleichzeitig wird eine entsprechende Vorspannung zwischen Bandage 4 und der Rotorwelle 1 beziehungsweise den darauf angeordneten Permanentmagneten 2 und Füllstücken 3 erreicht.

Anschließend werden die Verstärkungsleisten 6 entfernt. Bei Verwendung eines thermoplastischen Klebers (zum Aufbringen der Verstärkungsleisten 6) genügt hierfür eine Erwärmung der Verstärkungsleisten, um sie anschließend (durch entsprechende Plastizität des Klebers) abnehmen zu können. Sie können aber auch abgedreht werden.

Die Vorspannung zwischen Bandage und Rotorwelle kann durch den Innendurchmesser der Bandage auf das jeweils gewünschte Maß abgestimmt werden. Insoweit läßt sich die Vorspannung in Abhängigkeit von den maximal auftretenden Umdrehungsgeschwindigkeiten der Synchronmaschine einstellen.

Der beschriebene Rotor läßt sich nicht nur wirtschaftlicher herstellen, er verbessert auch die Funktion und Sicherheit der so konfektionierten Synchronmaschine erheblich. Außer der Möglichkeit, eine definierte Vorspannung zu erzeugen, hat die beschriebene Verwendung einer separat vorgefertigten Bandage, die anschließend axial auf die Rotorwelle aufgeschoben wird, den Vorteil, daß die Rotorwelle 1 der Synchronmaschine nicht in eine Wickelvorrichtung eingebracht zu werden braucht.

Ebenfalls entfällt jede Art einer aufwendigen Verkeilung, bei gleichzeitiger Minimierung der Bandagendicke.

## Patentansprüche

1. Rotor für permanentmagneterregte elektrische Maschinen hoher Drehzahl mit folgenden Merkmalen:
1.1 auf einem Teilabschnitt der Rotorwelle (1) sind umfangsseitig Permanentmagnete (2) mit dazwischen angeordneten Füllstücken (3) aus unmagnetischem Material angeordnet,
1.2 die Permanentmagnete (2) und die Füllstücke (3) verlaufen in axialer Richtung der Rotorwelle (1) und sind
1.3 umfangsseitig von einer unter Vorspannung stehenden Bandage (4) aus einem hochfesten Werkstoff ummantelt,
**dadurch gekennzeichnet,** daß
1.4 die gemeinsame Umfangsfläche von Permanentmagneten (2) und Füllstücken (3), in axialer Richtung der Rotorwelle betrachtet, leicht konisch ausgebildet ist und
1.5 die Bandage (4) als vorgefertigtes Bauteil mit korrespondierendem Innenkonus durch unmittelbare axiale Verschiebung auf die mit den Permanentmagneten (2) und Füllstücken (3) konfektionierte Rotorwelle (1) aufgeschoben worden ist, unter gleichzeitiger Aufbringung einer Vorspannung der Bandage (4) gegenüber der Rotorwelle (1).

2. Rotor nach Anspruch 1, bei dem die Rotorwelle (1) im Bereich der Permanentmagnete (2) und Füllstücke (3) mit einer polygonalen Querschnittsfläche ausgebildet ist und die Permanentmagnete (2) sowie Füllstücke (3) jeweils auf den zugehörigen Polygonflächen fixiert sind.

3. Rotor nach Anspruch 2, bei dem die Permanentmagnete (2) und Füllstücke (3) auf den zugehörigen Polygonflächen aufgeklebt sind.

4. Rotor nach einem der Ansprüche 1 bis 3, bei dem jeweils mehrere Permanentmagnete (2) auf zwei gegenüberliegenden Abschnitten der Rotorwelle (1) nebeneinander und die Füllstücke (3) dazwischen angeordnet sind, wobei die Gruppen (2', 2'') von Permanentmagneten (2) eine unterschiedliche Polung aufweisen.

5. Rotor nach einem der Ansprüche 2 bis 4, bei dem die Rotorwelle (1) im Querschnitt als Zwölfeck ausgebildet ist und die Permanentmagnete (2) jeweils zu vier Stück nebeneinander und dazwischen die Füllstücke (3) angeordnet sind.

6. Rotor nach einem der Ansprüche 1 bis 5, bei dem die Füllstücke (3) aus Stahl bestehen.

7. Rotor nach einem der Ansprüche 1 bis 5, bei dem die Füllstücke (3) aus Weicheisenelementen bestehen.

8. Rotor nach einem der Ansprüche 1 bis 7, bei dem die Bandage (4) aus einem faserverstärkten Kunststoff besteht.

9. Rotor nach Anspruch 8, bei dem die Bandage (4) aus mit Kohlenstoffasern verstärktem Kunststoff besteht.

10. Rotor nach einem der Ansprüche 1 bis 9, bei dem die Bandage (4) durch einen Haftvermittler auf der Rotorwelle (1) festliegt.

11. Rotor nach einem der Ansprüche 1 bis 10 mit in der Bandage (4) integrierten, axial verlaufenden Verstärkungsleisten.

12. Rotor nach einem der Ansprüche 1 bis 11, bei dem zwischen benachbarten Flächenabschnitten von Permanentmagneten (2), Füllstücken (3) und Rotorwelle (1) ein Haftvermittler angeordnet ist.

13. Rotor nach Anspruch 12, bei dem der Haftvermittler aus einem elastischen Werkstoff besteht.

14. Rotor nach Anspruch 12 oder 13, bei dem in den durch den Haftvermittler ausgefüllten Klebefugen elastische Füllstücke integriert sind.

15. Permanentmagneterregte elektrische Maschine für hohe Drehzahlen mit einem Rotor nach einem der Ansprüche 1 bis 14.

## Claims

1. Rotor for permanent magnet-excited, high-speed electric machines with the following features:
1.1 permanent magnets (2) with fillers (3) made of nonmagnetic material arranged between them are arranged circumferentially on a partial section of the rotor shaft (1),
1.2 the permanent magnets (2) and the fillers (3) extend in the axial direction of the rotor shaft (1) and are
1.3 surrounded on the circumferential side by a pre-stressed binding (4) made of a high-strength material,
**characterized in that**
1.4 the common circumferential surface of permanent magnets (2) and fillers (3), viewed in the axial direction of the rotor shaft, is of slightly conical design, and
1.5 the binding (4) as a prefabricated component with a corresponding inner cone has been pushed onto the rotor shaft (1) equipped with the permanent magnets (2) and fillers (3) by direct axial displacement, while a pre-stress of the binding (4) relative to the rotor shaft (1) is applied at the same time.

2. Rotor as defined in claim 1, wherein the rotor shaft (1) is designed with a polygonal cross-sectional area in the area of the permanent magnets (2) and fillers (3), and the permanent magnets (2) as well as fillers (3) are fixed on the corresponding polygonal surfaces.

3. Rotor as defined in claim 2, wherein the permanent magnets (2) and fillers (3) are bonded onto the corresponding polygonal surfaces.

4. Rotor as defined in one of claims 1 to 3, wherein a plurality of permanent magnets (2) are arranged next to one another on two opposite sections of the rotor shaft (1), and the fillers (3) are arranged between them, and the groups (2', 2") of permanent magnets (2) have a different polarity.

5. Rotor as defined in one of claims 2 to 4, wherein the rotor shaft (1) has a dodecagonal cross section, and the permanent magnets (2) are arranged in groups of four next to one another, and the fillers (3) are arranged between them.

6. Rotor as defined in one of claims 1 to 5, wherein the fillers (3) consist of steel.

7. Rotor as defined in one of claims 1 to 5, wherein the fillers (3) consist of soft iron elements.

8. Rotor as defined in one of claims 1 to 7, wherein the binding (4) consists of a fibre-reinforced plastic.

9. Rotor as defined in claim 8, wherein the binding (4) consists of a plastic reinforced with carbon fibres.

10. Rotor as defined in one of claims 1 to 9, wherein the binding (4) is attached to the rotor shaft (1) by means of a bonding agent.

11. Rotor as defined in one of claims 1 to 10, with axially extending reinforcing strips integrated in the binding (4).

12. Rotor as defined in one of claims 1 to 11, wherein a bonding agent is arranged between adjacent surface sections of permanent magnets (2), fillers (3) and rotor shaft (1).

13. Rotor as defined in claim 12, wherein the bonding agent consists of an elastic material.

14. Rotor as defined in claim 12 or 13, wherein elastic fillers are integrated in the bonding joints filled with the bonding agent.

15. Permanent magnet-excited electric machine for high speeds with a rotor as defined in any one of claims 1 to 14.

## Revendications

1. Rotor pour des machines électriques excitées par aimant permanent et à vitesse de rotation élevée, comportant les particularités suivantes :
1.1 des aimants permanents (2) et des éléments de remplissage (3) agencés entre eux et en une matière non magnétique sont agencés de manière périphérique sur un tronçon partiel de l'arbre de rotor (1),
1.2 les aimants permanents (2) et les éléments de remplissage (3) s'étendent dans la direction axiale de l'arbre de rotor (1) et
1.3 sont enveloppés de façon périphérique par un bandage (4) constitué d'une matière résistante et mis sous précontrainte,
caractérisé en ce que
1.4 la surface périphérique commune des aimants permanents (2) et des éléments de remplissage (3) est réalisée de façon légèrement conique, en considérant la direction axiale de l'arbre de rotor, et
1.5 le bandage (4) a été glissé, sous la forme d'un élément constitutif préfabriqué avec un cône interne correspondant, par un glissement axial direct sur l'arbre de rotor (1) confectionné avec les aimants permanents (2) et les éléments de remplissage (3), en appliquant simultanément une précontrainte du bandage (4) par rapport à l'arbre de rotor (1).

2. Rotor suivant la revendication 1, dans lequel l'arbre de rotor (1) est réalisé avec une surface transversale polygonale dans la zone des aimants permanents (2) et des éléments de remplissage (3) et dans lequel les aimants permanents (2) et les éléments de remplissage (3) sont fixés chaque fois sur les faces de polygone correspondantes.

3. Rotor suivant la revendication 2, dans lequel les aimants permanents (2) et les éléments de remplissage (3) sont collés sur les faces de polygone correspondantes.

4. Rotor suivant l'une des revendications 1 à 3, dans lequel chaque fois plusieurs aimants permanents (2) sont agencés l'un à côté de l'autre sur deux tronçons opposés de l'arbre de rotor (1) et les éléments de remplissage (3) sont agencés là entre, les groupes (2', 2") d'aimants permanents (2) présentant une polarité différente.

5. Rotor suivant l'une des revendications 2 à 4, dans lequel l'arbre de rotor (1) est réalisé sous la forme d'un dodécagone en section transversale et dans lequel les aimants permanents (2) sont chaque fois agencés par quatre pièces l'une à côté de l'autre et les éléments de remplissage (3) sont agencés là entre.

6. Rotor suivant l'une des revendications 1 à 5, dans lequel les éléments de remplissage (3) sont en acier.

7. Rotor suivant l'une des revendications 1 à 5, dans lequel les éléments de remplissage (3) sont des éléments en fer doux.

8. Rotor suivant l'une des revendications 1 à 7, dans lequel le bandage (4) est en matière synthétique renforcée par fibre.

9. Rotor suivant la revendication 8, dans lequel le bandage (4) est en matière synthétique renforcée par fibre de carbone.

10. Rotor suivant l'une des revendications 1 à 9, dans lequel le bandage (4) est fixé sur l'arbre de rotor (1) par un agent adhésif.

11. Rotor suivant l'une des revendications 1 à 10, comportant des barres de renforcement s'étendant axialement et intégrées dans le bandage (4).

12. Rotor suivant l'une des revendications 1 à 11, dans lequel un agent adhésif est agencé entre des tronçons de face voisines d'aimants permanents (2), d'éléments de remplissage (3) et de l'arbre de rotor (1).

13. Rotor suivant la revendication 12, dans lequel l'agent adhésif est une matière élastique.

14. Rotor suivant la revendication 12 ou 13, dans lequel des éléments de remplissage élastiques sont intégrés dans les joints de colle remplis par l'agent adhésif.

15. Machine électrique excitée par aimant permanent, pour des vitesses de rotation élevées, comportant un rotor suivant l'une des revendications 1 à 14.
